# EUROPÄISCHE PATENTSCHRIFT

(11) **EP 2 518 331 B1**
(45) Veröffentlichungstag und Bekanntmachung des Hinweises auf die Patenterteilung: **22.11.2017**
(21) Anmeldenummer: 12004443.3
(22) Anmeldetag: 26.08.2008
(51) Int. Cl.: F15B 11/028, B25B 5/06, F15B 21/08

(54) **Ventilvorrichtung**
Valve device
Dispositif de soupape

(30) Priorität: 13.11.2007 DE 102007054503
(43) Veröffentlichungstag der Anmeldung: 31.10.2012
(62) Teilanmeldung aus: 08801707.4
(73) Patentinhaber: Hydac Fluidtechnik GmbH, 66280 Sulzbach/Saar (DE)
(72) Erfinder: Grigoleit, Axel, 42799 Leichlingen (DE); Steinmann, Bernhard, 66453 Gersheim (DE)
(74) Vertreter: Bartels & Partner

(56) Entgegenhaltungen:
- EP-A- 1 068 932
- WO-A-2005/005842
- DE-A1- 3 836 453
- DE-A1-102005 021 887
- DE-C1- 19 530 131

## Beschreibung

Die Erfindung betrifft eine Ventilvorrichtung für eine Spanndruckeinstellung und -überwachung einer Spanneinrichtung für zu spannende Werkstücke, insbesondere bei Drehmaschinen, mit den Merkmalen im Oberbegriff von Anspruch 1.

Bei modernen Werkzeugmaschinen, beispielsweise Drehmaschinen, werden die spanend zu bearbeitenden Werkstücke regelmäßig über hydraulisch betätigbare Spanneinrichtungen, insbesondere in Form von Spannzylindern gespannt und/oder mittels hydraulisch betätigbarer sogenannter Reitstockpinolen gegengehalten, wobei erst nach Erreichen des Spanndruckes die jeweilige Maschine freigegeben wird. Wenn sich nun während der Bearbeitung mit der Werkzeugmaschine der Spanndruck an der Spanneinrichtung aufgrund eines Fehlers reduziert, kann dies zum Lösen der Spanneinrichtung führen und das dann frei gegebene Werkstück kann zu schweren Beschädigungen an der Maschine führen und für den Maschinenbediener ein erhebliches Sicherheitsrisiko darstellen.

Neben der dahingehenden Spanndrucküberwachung auf sichere Spannkräfte, kann es auch sinnvoll sein, den Spanndruck und mithin die Spannkraft abzusenken um eine Beschädigung an dem spanend bearbeiteten Werkstück zu verhindern, wenn dieses beispielsweise aufgrund der Art der Bearbeitung aus dem "Vollen herausgedreht" reduzierte Wandstärkengeometrien erhält, die bei gleichbleibender Spannkraft, bezogen zunächst auf das eingesetzte Vollmaterial, zur Deformierung der in der Wandstärke reduzierten und mithin geschwächten Werkstückgeometrie führen würde.

Aus der EP 1 068 932 A2 ist eine Klemmvorrichtung mit integrierbarem Ventil und Positionskontrolleinrichtung bekannt. Die bekannte Klemmvorrichtung weist einen Klemmarm auf, der als Reaktion auf die Bewegung eines Stellglieds zwischen einer Klemmstellung und einer gelösten Stellung beweglich ist. Hierbei ist das Stellglied als Reaktion auf einen Differenzial-Flüssigkeitsdruck in einer ersten und einer zweiten Kammer auf gegenüberliegenden Seiten des Stellglieds beweglich. Die Vorrichtung weist Mittel zum Messen und Einstellen des Flüssigkeitsdrucks in der ersten und zweiten Kammer auf. Die Mittel zum Einstellen des Flüssigkeitsdrucks umfassen in einer Ausführungsform je Kammer jeweils drei Ventile in Form eines Durchflussregelungsventils als Dosiermittel, eines 3-Wegeventils als Richtungsregelungsventil, sowie eines Richtungsregelungsmagnetventils als Vorsteuermittel des Richtungsregelungsventils.

Die WO 2005/005842 A1 und die DE 10 2005 021 887 A1 beschreiben jeweils eine Ventilvorrichtung für eine Spanndruckeinstellung und -überwachung einer Spanneinrichtung für zu spannende Werkstücke, insbesondere bei Drehmaschinen, mit zwei Druckregelventilen, über die eine Spanndruckeinstellung für die Spanneinrichtung erfolgt, und mit zwei Drucksensoren, die den jeweiligen Spanndruck der Spanneinrichtung erfassen, der in Bezug auf einen vorgebbaren Soll-Spanndruck abzugleichen ist, wobei unter Weglassen von Wegeventilen die Ventilvorrichtung die zwei Druckregelventile aufweist, die Proportional-Druckminderventile sind, wobei die Spanneinrichtung zwei Rückschlagventile aufweist, die in Richtung des jeweiligen Druckminderventiles ihre Sperrstellung einnehmen.

Ausgehend von diesem Stand der Technik liegt der Erfindung die Aufgabe zugrunde, bei der spannenden Aufnahme von spanend zu bearbeiteten Werkstücken bei Werkzeugmaschinen, wie Drehmaschinen, die Sicherheit zu erhöhen, sowie ungewollten Beschädigungen des Werkstückes vorzubeugen.

Eine dahingehende Aufgabe löst eine Ventilvorrichtung mit den Merkmalen des Patentanspruches 1 in seiner Gesamtheit.

Gemäß dem Kennzeichen von Anspruch 1 ist vorgesehen, dass die Proportional-Druckminderventile über eine jeweilige Rückdrucksperre eine Sekundärdruckabsicherung erhalten, wobei die jeweilige Rückdrucksperre jeweils in einer Leitung angeordnet ist, welche das jeweilige Proportional-Druckminderventil mit einer Tankleitung verbindet.

Die Ventilvorrichtung weist zwei Druckregelventile auf, über die eine Spanndruckeinstellung für die Spanneinrichtung erfolgt, und weist zwei Drucksensoren auf, die den jeweiligen Spanndruck der Spanneinrichtung erfassen, der in Bezug auf einen vorgebbaren Soll-Spanndruck abzugleichen ist, wobei unter Weglassen von Wegeventilen die Ventilvorrichtung zwei Druckregelventile aufweist, die Proportional-Druckminderventile sind. Mit der dahingehenden Ventilvorrichtung ist es möglich, den sicherheitstechnisch relevanten Spanndruck einzustellen und auch während der Bearbeitung im Sinne eines Abgleichs zu überwachen, insbesondere gleichbleibend beizubehalten oder abzusenken.

Mit Hilfe des jeweiligen Drucksensors wird der aktuelle Druck der Spanneinrichtung gemessen, sei es in Form des hydraulisch zu betätigenden Spannzylinders, sei es in Form einer hydraulisch zu betätigenden Reitstockpinole. Dieser aktuelle Spanndruck soll dann einem vorgegebenen Soll-Spanndruck entsprechen, der von der Steuereinrichtung beispielsweise in Form einer Maschinensteuerung für die Werkzeugmaschine vorgebbar ist.

Durch die Ansteuerung des Druckregelventiles, vorzugsweise in Form eines Druckminderventiles, kann dann mittels der Ansteuerung über die Steuereinrichtung der Druck der Spanneinrichtung auf konstantbleibende Druckwerte eingestellt oder sogar abgesenkt werden. Da es dem Grunde nach für jedes zu bearbeitende Werkstück entsprechend des gewünschten Bearbeitungszustandes andere Spanndruckvorgaben gibt, werden diese von der Steuerung der Maschine, also von der Steuereinrichtung entsprechend dem Bearbeitungsfortschritt als Soll-Spanndruck zeitnah vorgegeben. Hierdurch ist zum einen eine sichere Spannkraftüberwachung erreicht, um zu vermeiden, dass sich ungewollt das Werkstück aus der Spanneinrichtung löst. Ferner ist die Möglichkeit geschaffen bei Bedarf eine Spannkraftverminderung durchzuführen, um das Werkstück während der Bearbeitung vor Beschädigungen über eine zu hoch eingestellte Spann-Druckkraft zu sichern.

Weitere vorteilhafte Ausgestaltungen der erfindungsgemäßen Ventilvorrichtung sind Gegenstand der weiteren Unteransprüche.

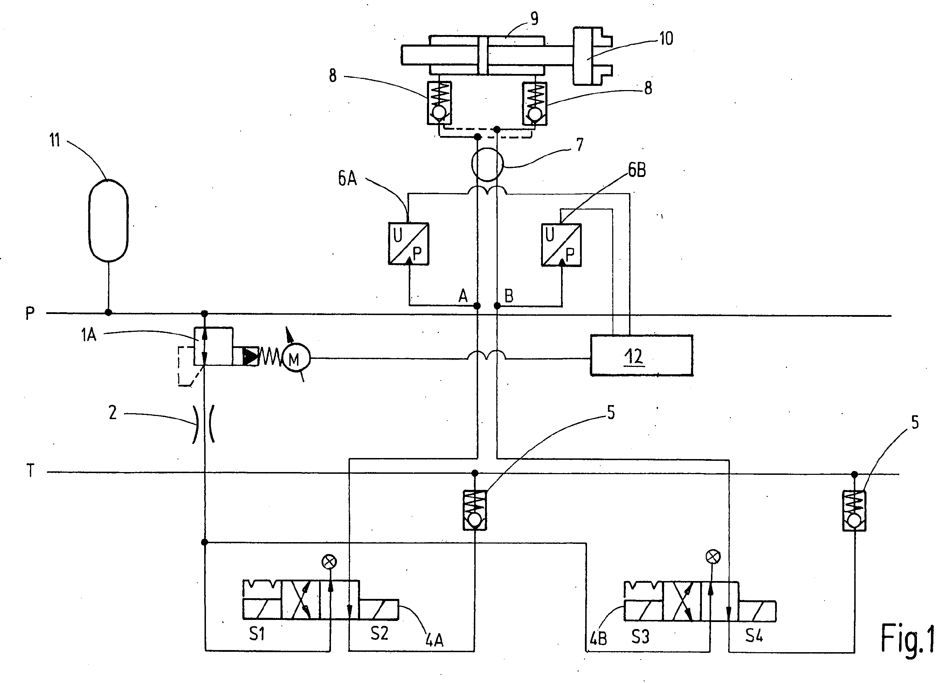

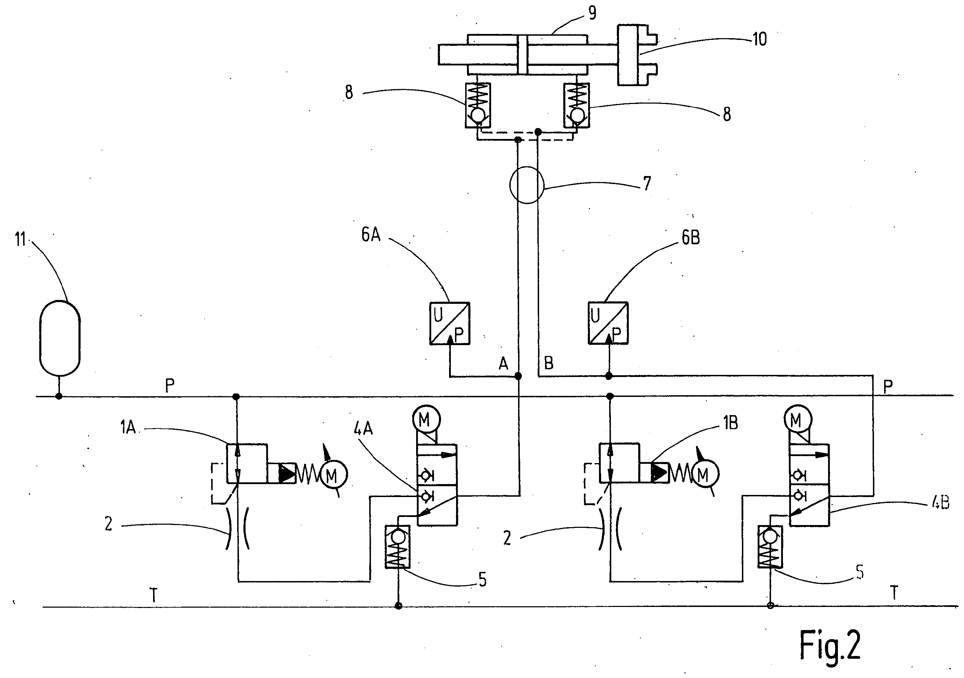

Im Folgenden wird die erfindungsgemäße Ventilvorrichtung anhand der Zeichnung näher erläutert. Die in den Figuren 1 und 2 dargestellten Gegenstände sind Bestandteil der früheren europäischen Patentanmeldung Nr. 08 801 707.4 der gleichen Anmelderin und gehören nicht zu der in der vorliegenden Anmeldung beanspruchten Erfindung. Die in den Figuren 1 und 2 dargestellten Gegenstände sowie deren jeweilige Beschreibung stehen jedoch in Zusammenhang mit der in der vorliegenden Anmeldung beanspruchten Erfindung und dienen dem besseren Verständnis der beanspruchten Erfindung. Dabei zeigen in der Art von hydraulischen Schaltbildern in prinzipieller Darstellung die
- Fig. 1: eine nicht erfindungsgemäße Ventilvorrichtung unter Einsatz eines Druckregelventiles;
- Fig. 2: eine nicht erfindungsgemäße Ventilvorrichtung gemäß der Darstellung nach der Fig. 1 unter Einsatz zweier Druckregelventile; und
- Fig. 3: eine Ausführungsform der erfindungsgemäßen Ventilvorrichtung entsprechend der Darstellung nach den Fig. 1 und 2, jedoch mit einer Sekundärdruckabsicherung und unter Wegfall der Wegeventile.

Bei den drei Ventilvorrichtungen werden dem Grunde nach vergleichbare Komponenten, insbesondere Ventilkomponenten, eingesetzt und mit denselben Bezugszeichen benannt. Es handelt sich hierbei um die Folgenden Grundkomponenten:
- 1A, 1B: Druckregelventile mit mechanischer Selbsthemmung,
- 2: Blende,
- 4A, 4B: Wegeventile mit rastender (selbsthaltender) Position,
- 5: Rückdrucksperre in Form eines Rückschlagventiles,
- 6A, 6B: Drucksensoren,
- 7: Drehdurchführung,
- 8: zwei Rückschlagventile,
- 9: als Gleichgangzylinder ausgebildeter Spannzylinder,
- 10: Spannfutter mit kleinem Übersetzungsverhältnis (ohne Selbsthemmung),
- 11: Hydraulikspeicher,
- 12: Steuerung.

Der in den Figuren mit 9 bezeichnete Spannzylinder ist als sogenannter hydraulischer Gleichgangzylinder ausgebildet und in der einen Verfahrrichtung werden die Backen des Spannfutters 10 aufeinander zugestellt und in der gegenläufigen Richtung weg bewegt. Dergestalt läßt sich sowohl über den Innendurchmesser als auch in der anderen Betätigungsrichtung über den Außendurchmesser der Spannbacken des Spannfutters ein spanend zu bearbeitendes Werkstück (nicht dargestellt) lösbar mit einer hydraulischen Betätigungskraft festlegen.

Die mit 7 bezeichnete Drehdurchführung erlaubt ein Schwenken der Spanneinrichtung in mindestens einer Bewegungs- oder Schwenkachse. Dahingehende Drehdurchführungen für hydraulische Zu- und Abführleitungen sind im Stand der Technik in einer Vielzahl von Ausführungsformen bekannt, so dass an dieser Stelle hierauf nicht mehr näher eingegangen wird. Jedenfalls ist dergestalt über die Drehdurchführung 7 sichergestellt, dass eine hydraulische Versorgung der Arbeitsräume des Spannzylinders 9 stattfindet, auch wenn der Spannzylinder 9 mit dem Spannfutter 10 geschwenkt wird. Die aus Spannzylinder 9 und Spannfutter 10 bestehende Spanneinrichtung ist nur beispielhaft aufgezeigt; andere Arten von Spanneinrichtungen (Reitstockpinolen) sind hier gleichfalls für die noch zu beschreibende Ventilvorrichtung einsetzbar.

Die mit 2 bezeichnete Blende an der Ausgangsseite des jeweiligen Druckregelventiles 1A, 1B dient der Anpassung des Volumenstroms an die volumetrische Größe des Spannzylinders 9, die je nach Bearbeitungsfall auch für eine Werkzeugmaschine unterschiedlich sein kann. Die mit P bezeichnete Fluidleitung ist an eine hydraulische Versorgungseinrichtung (nicht näher dargestellt) angeschlossen, beispielsweise gebildet aus einer hydraulischen Versorgungspumpe. Der mit 11 bezeichnete Hydraulikspeicher, der an die Pumpenleitung P angeschlossen ist, erlaubt dann eine Druckversorgung des Systems bei Stromausfall. Die mit T bezeichnete Tankanschlussleitung oder Tankleitung erlaubt die Rückfuhr des Arbeitsmediums in Form von Hydrauliköl in den Tank, von wo aus die hydraulische Versorgung über die Pumpe unter Bildung eines hydraulischen Kreises stattfinden kann. Auch die dahingehende Anordnung ist üblich, so dass an dieser Stelle hierauf nicht mehr näher eingegangen wird.

Bei der Ventilvorrichtung nach der Fig. 1 läßt sich der Spanndruck für den Spannzylinder 9 über das Druckregelventil 1A mit mechanischer Selbsthemmung einstellen, wobei der Wert auf einem nicht näher dargestellten Digitaldisplay einer üblichen elektronischen Steuerung 12 anzeigbar ist. Die dahingehende in Fig. 1 als Blackbox dargestellte Steuerung 12 steuert mithin zur Einstellung des vorgebbaren Spanndruckwertes den Motor M des Druckregelventiles 1A an, die darüber hinaus an die Drucksensoren 6A, 6B angeschlossen ist, um dergestalt den in den Nutzanschlüssen A, B anstehenden Ist-Druck zu erfassen, die wiederum fluidführend über die Rückschlagventile 8 jeweils mit den zugehörigen Arbeitsräumen des Spannzylinders 9 verbunden sind. Mittels der Steuerung 12 kann der Bediener also insoweit entsprechende Druckwerte für das Druckregelventil 1A frei vorgeben oder die Ansteuerung erfolgt über ein entsprechendes Programm der Steuerung 12, wobei für unterschiedlich zu spannende Werkstücke unterschiedliche Programmierungen vorgesehen sind, die wiederum im vorgebbaren Rahmen frei wählbar sind. Der derart von Hand oder über das jeweilige Programm der Maschinensteuerung vorgegebene eingestellte Druck wird also insoweit übernommen und im Rahmen der weiteren Bearbeitung kontinuierlich überwacht. Fällt dann beispielsweise aufgrund eines technischen Versagens der Spanndruck am Spannzylinder 9 ab, ist dies über den jeweils zuordenbaren Drucksensor 6A, 6B erfassbar, und eine entsprechende Fehlmeldung geht dann an die Steuerung 12 mit der Folge, dass diese den zuordenbaren Maschinentrieb an der Bearbeitungsmaschine für die Spanneinrichtung abschaltet, was zeitnah erfolgt. Dergestalt lassen sich Beschädigungen an der Bearbeitungsmaschine und/oder am zu bearbeitenden Werkstück vermeiden. Je nach Wahl der Programmierung lässt sich der Spanndruck sowohl bei einer Innenspannung als auch bei der Außenspannung mittels des Spannfutters 10 des Spannzylinders 9 überwachen.

Während die Spanndruckeinstellung am Ventil 1A erfolgt, geschieht das eigentliche Spannen durch Betätigen des Ventiles 4A, während Ventil 4B nicht betätigt ist. Die eingesetzten Ventile 4A, 4B sind in der Art von Wegeventilen ausgestaltet mit rastender (selbsthaltender) Position, wobei diese jeweils über zuordenbare elektrische Steuermagnete S1, S2, S3 und S4 in die jeweilige Betätigungsstellung bringbar sind, um dergestalt den Spannzylinder 9 verfahren zu können. Ist das Ventil 4A betätigt, erfolgt eine Spanndrucküberwachung durch den Drucksensor 6A, wohingegen zur selben Zeit am Drucksensor 6B kein Gegendruck anstehen darf; andernfalls wäre dies bereits ein Hinweis für eine Fehlfunktion. Soll der Spannzylinder 9 entspannt werden, um beispielsweise das zu bearbeitende Werkstück freizugeben, erfolgt dann ein Schalten von Ventil 4B, während Ventil 4A in seine Ausgangsposition zurückgeschaltet wird. Wie die Darstellung nach der Fig. 1 zeigt, ist dabei ein Ausgang des jeweiligen Wegeventiles 4A, 4B fluiddicht über einen entsprechenden Dichtstopfen abgesperrt, da insoweit dieser Ausgang für die hier vorgesehene Funktion der Ventile nicht notwendig ist.

Gemäß der Funktionsdarstellung nach der Fig. 1 sind die beiden Rückschlagventile 8 derart miteinander verschaltet, dass sie gegenseitig entsperrbar und auf ihrer sperrenden Eingangsseite sowohl mit dem zuordenbaren Nutzanschluss A als auch mit dem Nutzanschluss B verbunden sind. Die als Rückschlagventil ausgebildete Rückdrucksperre 5 verhindert, dass ein etwaig in der Tankleitung T sich aufbauender Staudruck die Spannkraft ungewollt am Spannzylinder 9 verändert. Die für die erfindungsgemäße Ventilvorrichtung eingesetzten Ventilkomponenten sind Standardbauteile und lassen sich insoweit kostengünstig bereitstellen und sind im Übrigen funktionssicher in der Anwendung. Des weiteren ist das Druckregelventil 1A zum einen an die Fluidleitung P mit dem Hydraulikspeicher 11 angeschlossen und über die Blende 2 jeweils mit den Wegeventilen 4A und 4B fluidführend in Verbindung.

Mit der derart beschriebenen Ventilvorrichtung gemäß der Schaltung nach der Fig. 1 lässt sich bei einem Spanndruckabfall die Maschine stilllegen, um so erhöhten Sicherheitsanforderungen Genüge zu tun. Darüber hinaus erlaubt die Lösung nach der Fig. 1 eine Spannkraftverminderung, um Werkstückdeformationen vermeiden zu helfen, die beispielsweise dadurch entstehen können, dass während der Bearbeitung zunächst ein Vollprofil-Werkstück gespannt wird, das dann bei der spanenden Bearbeitung zu einem Hohlprofil wird, mit reduzierter Wandstärke, die ansonsten bei gleichbleibender Spannkraft deformiert werden könnte.

Hierfür sieht die Ventilvorrichtung nach der Fig. 1 wiederum eine Spanndruckeinstellung am Ventil 1A vor, das bevorzugt als Proportional-Druckminderventil ausgebildet ist. Ein Spannvorgang über den Spannzylinder 9 erfolgt durch Betätigen des Ventils 4A während Ventil 4B in seiner in Fig. 1 gezeigten Stellung bleibt. Im Nutzanschluss A findet dann eine Spanndrucküberwachung am Drucksensor 6A statt, während zeitgleich am Drucksensor 6B kein oder geringer Gegendruck anstehen darf. Ein Entspannen geschieht dann durch Schalten von Ventil 4B, während Ventil 4 A wieder in die Ausgangsposition zurückgeschaltet wird, gemäß der Darstellung nach der Fig. 1. Im Rahmen der vorliegenden Beschreibung wird grundsätzlich angenommen, dass durch Druckbeaufschlagung in der Nutzleitung A bei gleichzeitigem Abführen des Hydrauliköls aus der Nutzleitung B ein Spannvorgang über den Spannzylinder 9 und das Spannfutter 10 eingeleitet wird, wobei durch Umkehrung dieser Funktion ein Entspannvorgang durchgeführt wird.

Bei einem Wechsel von Innen- auf Außenspannung bezogen auf die Spannbacken des Spannfutters 10, gelten die getroffenen Ausführungen dann jedoch in umgekehrter Weise.

Für eine Spanndruckabsenkung mit nur einem Druckregler 1A gemäß der Darstellung nach der Fig. 1 erfolgt, wie bereits dargelegt, die Spanndruckeinstellung am Ventil 1A mittels der Steuerung 12 und das Entspannen erfolgt durch Schalten von Ventil 4A. Gleichzeitig erfolgt eine Spanndrucküberwachung mittels der Drucksensoren 6A, 6B, die ihre Werte an die Steuerung 12 üblicher Bauart weitergeben. Wird nun das Ventil 4B geschaltet, ergibt sich ein Ausgleich des Spanndrucks in den Nutzleitungen A, B, die Rückschlagventile 8 werden beide aufgesteuert und im Spannzylinder 9 findet ein Druckausgleich statt. Da im Spannfutter keine Selbsthemmung auftritt, wird die Spannkraft auf Null abgesenkt.

Das Spanndruckniveau am Druckregler 1A kann nun auf das gewünschte Niveau abgesenkt werden und der Spanndruck sinkt in den Leitungen A und B und aufgrund der geöffneten Rückschlagventile 8 auch im Spannzylinder 9. Die Spannkraft bleibt dann bei Null. Nach erfolgtem Rückschalten des Ventiles 4B wird der Druck in der Nutzleitung B und auf der Entspannseite des Spannzylinders 9 abgebaut, und durch den anstehenden Druck in der Nutzleitung A wird am Spannfutter 10 die Spannkraft auf niedrigerem Niveau wieder aufgebaut. Dergestalt ist die angesprochene Spannkraftminimierung erreicht.

Die Lösung nach der Fig. 1 setzt also zwei 4/2-Wegeventile 4A, 4B ein, von denen in Blickrichtung auf die Fig. 1 gesehen, der jeweils linke Ausgang in den Blindanschluss führt. Ferner sind die Ventile 4A, 4B an die jeweils zuordenbare Rückdrucksperre 5 angeschlossen, die jeweils mit der Tankleitung T verbunden ist. Der Ausgang der Drucksensoren 6A, 6B ist zur Auswertung des jeweiligen Messsignales mit der als Blackbox dargestellten Maschinensteuerung 12 für die Spanndruckkraftabsenkung verbunden, wobei die Steuerung 12 für die Vorgabe eines Drucksollwertes eine nicht näher dargestellte Handeingabe aufweist oder über einen frei programmierbaren Ablaufplan (Programm) verfügt.

Sollte nicht sichergestellt werden können, dass beim Spanndruckausgleich die Reibung für den eigentlichen Halt des Werkstückes im Spannfutter 10 ausreicht, bietet sich die Ventilvorrichtung nach der Fig. 2 mit zwei Druckreglern 1A, 1B an. Die dahingehende Spanndruckabsenkung sieht dann vor, dass am Druckregelventil 1B ein Druck knapp unterhalb des Niveaus in der Nutzleitung A eingestellt wird. Mit Schaltung des Ventiles 4B wird dann in der Nutzleitung B ein Gegendruck aufgebaut, und die Rückschlagventile 8 werden beide aufgesteuert. Da im Spannfutter 10 keine Selbsthemmung auftritt, wird die Spannkraft auf einen geringen Wert abgesenkt. Dabei wird der Druck an den Ventilen 1A und 1B abgesenkt, bis in der Nutzleitung A das gewünschte Niveau erreicht ist. Die Druckdifferenz zwischen den Ventilen 1A und 1B muss dabei erhalten bleiben. Aufgrund der geöffneten Rückschlagventile 8 sinkt der Spanndruck auch im Spannzylinder 9 mit der Folge, dass die Spannkraft dabei auf konstant niedrigem Niveau bleibt. Durch Rückschalten des Ventils 4B wird der Druck in der Nutzleitung B und auf der Entspannseite des Spannzylinders 9 abgebaut. Durch den Druck in der Nutzleitung A wird am Spannfutter 10 die Spannkraft dann auf niedrigerem Niveau wieder aufgebaut.

An Stelle des Einsatzes von 4/2-Wegeventilen ist die Ventilvorrichtung nach der Fig. 2 mit motorangetriebenen 3/2-Wegentilen 4A, 4B ausgestattet. Ferner können die in den Fig. 1 und 2 dargestellten 2-Wege-Druckregler auch durch 3-Wege-Druckregler ersetzt werden.

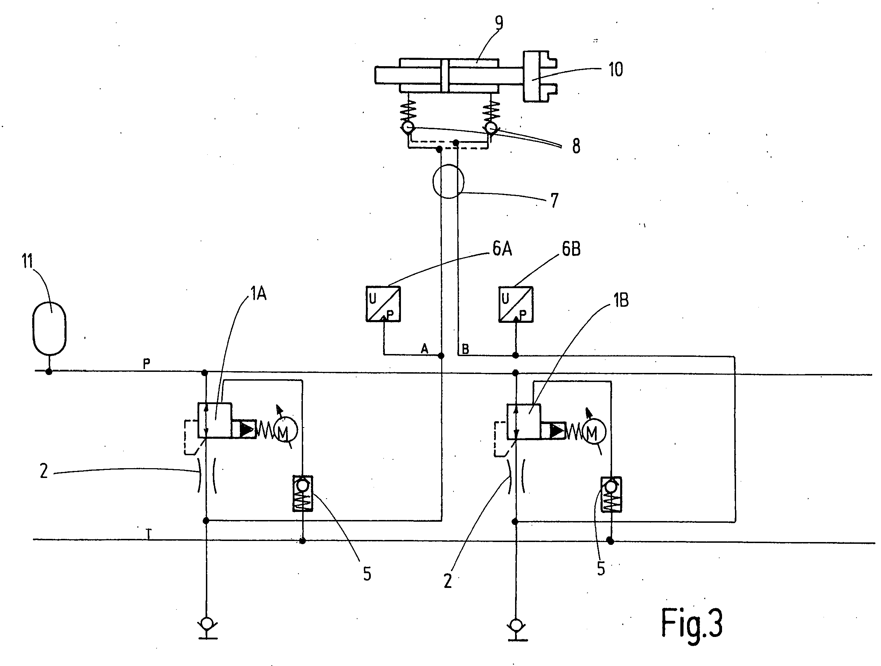

Die erfindungsgemäße Ausführungsform nach der Fig. 3 unterscheidet sich von den beiden vorangegangenen Ventilvorrichtungen dadurch, dass weder Wegeventile mit rastender Position benötigt werden gemäß der Darstellung nach der Fig. 1 noch motorgetriebene 3/2-Wegeventile gemäß der Ventilvorrichtung nach der Fig. 2. Vielmehr kommen bei der Lösung nach der Fig. 3 nur zwei Proportionaldruckminderventile 1A, 1B zum Einsatz, die über die jeweilige Rückdrucksperre 5 eine Sekundärdruckabsicherung erhalten. Der einfacheren Darstellung wegen wurde in den Figuren 2 und 3 bei den dortigen Ausführungsformen die Steuerung 12 mit ihren entsprechenden Anschlussstellen nicht eingezeichnet, insofern gelten aber die Ausführungen betreffend die Lösung nach der Fig. 1.

Die erfindungsgemäße Ventilvorrichtung ist insofern vorteilhaft, als sie sich in Modulbauweise auch nachträglich an bereits bestehende Werkstück-Spanneinrichtungen bei Werkzeugmaschinen anbringen läßt. Aufgrund des modulartigen Blockaufbaus der Ventilvorrichtung nimmt diese wenig Bauraum ein und ist aufgrund der verwendbaren Standardbauteile kostengünstig in der Realisierung.

## Patentansprüche

1. Ventilvorrichtung für eine Spanndruckeinstellung und -überwachung einer Spanneinrichtung (9) für zu spannende Werkstücke, insbesondere bei Drehmaschinen, wobei unter Weglassen von Wegeventilen die Ventilvorrichtung zwei Druckregelventile (1A, 1B) aufweist, über die eine Spanndruckeinstellung für die Spanneinrichtung (9) erfolgt, und mit zwei Drucksensoren (6A, 6B), die den jeweiligen Spanndruck der Spanneinrichtung (9) erfassen, der in Bezug auf einen vorgebbaren Soll-Spanndruck abzugleichen ist, wobei die zwei Druckregelventile (1A, 1B) Proportional-Druckminderventile (1A, 1B) sind, **dadurch gekennzeichnet, dass** die Proportional-Druckminderventile (1A, 1B) über ein jeweilige Rückdrucksperre (5) eine Sekundärdruckabsicherung erhalten, wobei die jeweilige Rückdrucksperre (5) jeweils in einer Leitung angeordnet ist, welche das jeweilige Proportional-Druckminderventil (1A, 1B) mit einer Tankleitung (T) verbindet.

2. Ventilvorrichtung nach Anspruch 1, **dadurch gekennzeichnet, dass** das jeweilige Druckregelventil (1A, 1B) mit einer mechanischen Selbsthemmung versehen ist, die vorzugsweise durch ein selbsthemmendes Getriebe eines Verstellmotors (M) gebildet ist, der von der Steuereinrichtung ansteuerbar ist.

3. Ventilvorrichtung nach Anspruch 1 oder 2, **dadurch gekennzeichnet, dass** der jeweilige Drucksensor (6A, 6B) an eine elektronische Steuerung (12) angeschlossen ist oder dass ein Drucksensor Teil eines elektronischen Druckschalters ist, die jeweils frei programmierbar sind.

4. Ventilvorrichtung nach einem der Ansprüche 1 bis3, **dadurch gekennzeichnet, dass** zwei Druckregelventile (1A, 1B) unabhängig voneinander schaltbar sind.

5. Ventilvorrichtung nach einem der Ansprüche 1 bis 4, **dadurch gekennzeichnet, dass** zur Anpassung an die volumetrische Größe der jeweils eingesetzten Spanneinrichtung (9) eine Blende (2) dient, die auf der Ausgangsseite des jeweiligen Druckminderventiles (1A, 1B) angeordnet ist.

## Claims

1. A valve apparatus for setting and monitoring the clamping pressure of a clamping device (9) for workpieces which are to be clamped, in particular in lathes, by omitting directional control valves the valve apparatus having two pressure control valves (1A, 1B), by means of which a clamping pressure adjustment for the clamping device (9) takes place, and with two pressure sensors (6A, 6B) which detect the respective clamping pressure of the clamping device (9) which is to be adjusted to a definable setpoint clamping pressure, the two pressure regulating valves (1A, 1B) being proportional pressure reducing valves (1A, 1B), **characterised in that** the proportional pressure reducing valves (1A, 1B) acquire a secondary pressure safeguard by means of a respective reverse-pressure lock (5), the respective reverse-pressure lock (5) respectively being located in a line which connects the respective proportional pressure reducing valve (1A, 1B) to a tank line (T).

2. The valve apparatus according to Claim 1, **characterised in that** the respective pressure regulating valve (1A, 1B) is provided with mechanical self-locking which is preferably formed by self-locking gearing of a positioning motor (M) which can be triggered by the control means.

3. The valve apparatus according to Claim 1 or 2, **characterised in that** the respective pressure sensor (6A, 6B) is connected to an electronic control (12) or that a pressure sensor is part of an electronic pressure switch which can be freely programmed.

4. The valve apparatus according to any of Claims 1 to 3, **characterised in that** two pressure control valves (1A, 1B) can be switched independently of one another.

5. The valve apparatus according to any of Claims 1 to 4, **characterised in that**, to adapt to the volumetric size of the respectively used clamping device (9), an orifice (2) is used which is located on the output side of the respective pressure reducing valve (1A, 1B).

## Revendications

1. Dispositif de soupape pour régler et contrôler la pression de serrage d'un dispositif (9) de serrage de pièces à serrer, notamment dans des tours, dans lequel, en omettant des soupapes à canaux, le dispositif de soupape a deux soupapes (1A, 1B) de réglage de la pression, par lesquelles s'effectue un réglage de la pression de serrage du dispositif (9) de serrage, et comprenant deux capteurs (6A, 6B) de pression, qui détectent la pression de serrage respective du dispositif (9) de serrage, qui doit être égalisée à une pression de serrage de consignes pouvant être donnée à l'avance, les deux soupapes (1A, 1B) de réglage de la pression étant des soupapes (1A, 1B) de détente proportionnelles, **caractérisé en ce que** les soupapes (1A, 1B) de détente proportionnelles reçoivent, par un blocage (5) respectif de contre-pression, une protection vis-à-vis d'une pression secondaire, le barrage (5) de contre-pression étant monté dans un conduit, qui met la soupape (1A, 1B) de détente proportionnelle respective en communication avec un conduit (T) de réservoir.

2. Dispositif de soupape suivant la revendication 1, **caractérisé en ce que** la soupape (1A, 1B) de détente respective est pourvue d'un blocage mécanique automatique, formé de préférence par une transmission autobloquante d'un servomoteur (M) pouvant être commandé par le dispositif de commande.

3. Dispositif de soupape suivant la revendication 1 ou 2, **caractérisé en ce que** le capteur (6A, 6B) de pression respectif est relié à une commande (12) électronique ou **en ce qu'**un capteur de pression fait partie d'un manocontact électronique, lesquels peuvent être programmés librement respectivement.

4. Dispositif de soupape suivant l'une des revendications 1 à 3, **caractérisé en ce que** deux soupapes (1A, 1B) de réglage de la pression peuvent être mises en circuit indépendamment l'une de l'autre.

5. Dispositif de soupape suivant l'une des revendications 1 à 4, **caractérisé en ce que**, pour s'adapter à la dimension en volume du dispositif (9) de serrage utilisé, il est fait appel à un diaphragme (2) monté du côté de la sortie de la soupape (1A, 1B) de détente respective.
